# EUROPEAN PATENT APPLICATION

(11) **EP 2 071 475 A1**
(43) Date of publication of application: **17.06.2009**
(21) Application number: 07301645.3
(22) Date of filing: 07.12.2007
(51) Int. Cl.: G06F 17/30

(54) **Device and method for automatically executing a semantic search request for finding chosen information into an information source**

(71) Applicant: Alcatel Lucent, 75008 Paris (FR)
(72) Inventor: Larver, Philippe, 91470, Forges les Bains (FR); Pastor, Alain, 92100 Boulogne Billancourt (FR)
(74) Representative: Korakis-Ménager, Sophie

(57) **Abstract**

A device (D) is intended to work for at least one communication terminal (T) arranged for searching information in at least one information source (IS) when it is connected to it. This device (D) comprises i) a first means (FM) arranged for storing at least one semantic search request defining chosen information to be searched into the information source(s) (IS) at chosen instants for a chosen terminal user, ii) a second means (SM) arranged for interpreting the stored semantic request at these chosen instants, and iii) a third means (TM) arranged for automatically executing the semantic search request interpreted at the chosen instants, and for warning a user when information corresponding to his executed request has been found.

## Description

The present invention relates to the search of chosen information into at least one information source by means of a communication terminal comprising a browser.

One means here by "information source" one or more network elements or equipments capable of storing information to which communication terminals can access by means of a browser. So, it can be, for instance but not restrictively, websites of the world wide web (or Internet).

Moreover, one means here by "communication terminal" any type of communication equipment capable of being connected to a communication network in order to exchange data with another communication equipment. So, it can be, for instance, a fixed or wireless or mobile (or cellular) telephone or a fixed or portable computer or else a personal digital assistant (PDA), since it is equipped with a communication module connectable to a communication network coupled to at least one information source and with a browser capable of browsing this information source to search some information.

Often a person wants information relative to a specific subject without knowing when they will be available in an information source. For instance, a person would like to know when and/or where a chosen orchestra will be on stage or a specific product will be available for sale. Or, a person would like to get the latest and/or most popular pictures of a chosen person.

In these situations, each time the person connects his terminal to internet (for instance), he must manually provide his terminal browser with key words defining the information to be searched till the searched information become available. This type of research can waste a lot of time and can quickly become tedious.

In order to get some general information automatically, it is also possible to use a specific communicating agent, such as the one called Nabaztag. Such an agent is an equipment which is capable of connecting itself to a wireless network (for instance a Wi-Fi network) to get some chosen general information near a dedicated website after having been registered near this dedicated website. The user of this agent must use a communication terminal to register his agent near the dedicated website and to select one or more predetermined subjects or topics on which he wishes to receive some general information through his agent.

In other words, the user makes a subject selection near the website, and each time the website find new information relative to a selected subject, or each time the user requests information relative to a selected subject through his agent, the website transmits this new information or the requested information to the user agent which either stores it in order to broadcast it later to the user by means of an internal loudspeaker it comprises when the user requires it through a command, or broadcasts it immediately by means of the internal loudspeaker.

With such a solution, the user can not define his own requests, which strongly limits the field of search and can only provide general information but not precise and specific information. Moreover this compels the user to be equipped with a complementary equipment (the agent) in addition to his communication terminal.

So the object of this invention is to improve the situation, and more precisely to allow a user to define his own search requests to get automatically the requested information when it becomes available.

For this purpose, the invention provides a device, for at least one communication terminal arranged for searching information in at least one information source when it is connected to it, and comprising i) a first means arranged for storing a semantic search request defining chosen information to be searched into the information source(s) at chosen instants for a chosen terminal user, ii) a second means arranged for interpreting this stored semantic request at these chosen instants, and iii) a third means arranged for automatically executing this search request interpreted at the chosen instants, and for warning a user when information corresponding to his executed request has been found.

One means here by "semantic search request" a search request expressed in a free, simplified and natural-language form, this form being processed by a specific module (second means) of the invention.

It is important to note that this device may be, for instance, fully made of software modules that may be distributed or centralized.

The device according to the invention may include additional characteristics considered separately or combined, and notably:
- its second and third means may be arranged for automatically and respectively interpreting and executing the stored semantic search request each time the corresponding user connects his terminal to the information source(s);
- in a variant, its second and third means may be arranged for automatically and respectively interpreting and executing the stored semantic search request at chosen instants that have been defined by the corresponding user;
- its first means may be arranged for allowing a user to define a semantic search request by means of his terminal;
- its third means may be arranged for warning a user by triggering the transmission of a warning message to a communication means designated in association with the semantic search request;
   ➢ this communication means can be the user terminal, for instance;
- its third means may be arranged for warning a terminal user by means of a warning message of a type that has been designated in association with the semantic search request;
   ➢ for instance, the type of the warning message is chosen among a SMS, an e-mail, a popup window, and any kind of window;
- its third means may be arranged for searching information in an information source defined by the world wide web (or Internet);
- it may be at least partly arranged in the form of a cookie.

The invention also provides a browser for a communication terminal and comprising at least one device such as the one above introduced.

The invention also provides a first method intended for searching information in at least one information source for at least one communication terminal connected to this (these) source(s), and consisting i) of storing a semantic search request defining chosen information to be searched into the information source(s) at chosen instants for a chosen terminal user, ii) of automatically interpreting this semantic request (with the help of a semantic module) at these chosen instants, and iii) of automatically executing the search request interpreted at the chosen instants and of warning a user when information corresponding to his executed request has been found.

The first method according to the invention may include additional characteristics considered separately or combined, and notably :
- one may automatically interpret and execute the semantic search request each time the corresponding user connects his terminal to the information source(s);
- in a variant, one may automatically interpret and execute the semantic search request at chosen instants defined by the corresponding user;
- one may warn a user by triggering the transmission of a warning message to a communication means designated in association with the semantic search request;
   ➢ for instance, one may transmit the warning message to the terminal;
- one may warn a terminal user by means of a warning message of a type that has been designated in association with the semantic search request;
   ➢ for instance, the type of the warning message is chosen among a SMS, an e-mail, a popup window, and any kind of window;
- one may search information in an information source defined by the world wide web (or Internet).

The invention also provides a second method intended for creating a cookie for at least one communication terminal comprising a human/machine interface, and consisting i) of using this human/machine interface for defining a semantic search request intended for searching chosen information into at least one information source at chosen instants for a chosen user, and ii) of creating a cookie comprising a semantic module and intended for automatically interpreting this defined semantic search request by means of this semantic module and then for executing the semantic search request interpreted at the chosen instants and for warning a user when information corresponding to his executed request has been found.

The second method according to the invention may include additional characteristics considered separately or combined, and notably :
- one may use the human/machine interface for defining the chosen instants;
- one may use the human/machine interface for designating a communication means to which the warning message must be transmitted;
- one may use the human/machine interface for designating the type of a warning message that must be transmitted to a terminal user;
   ➢ for instance, the type of the warning message is chosen among a SMS, an e-mail, a popup window, and any kind of window.

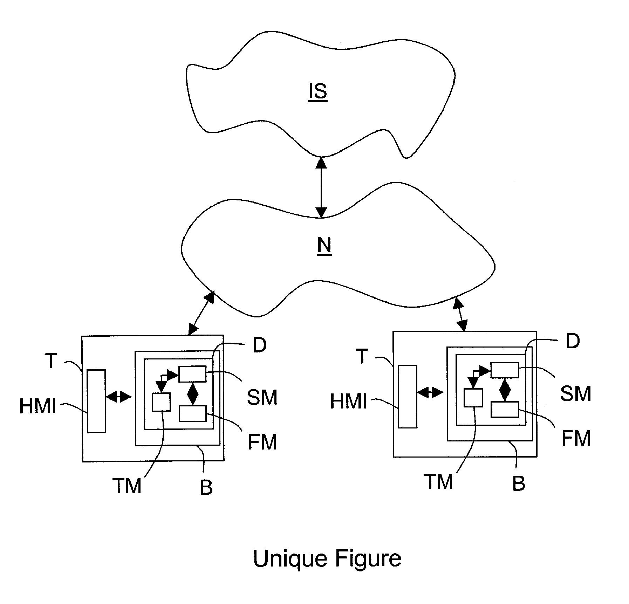

Other features and advantages of the invention will become apparent on examining the detailed specifications hereafter and the appended drawing, wherein the unique figure schematically and not restrictively illustrates a communication network to which are connected an information source and communication terminals equipped with an example of embodiment of a device according to the invention.

The appended drawing may serve not only to complete the invention, but also to contribute to its definition, if need be.

The invention aims at offering a device, and associated methods, intended for allowing at least one user of a communication terminal, capable of being connected to a communication network, to get requested information automatically when it becomes available.

In the following description it will be considered that the communication network is a xDSL network giving access to an information source such as the websites of the world wide web (or Internet). But the invention is not limited to this kind of communication network. Indeed, it concerns any type of communication network offering to communication terminals an access to at least one information source (whatever the type). So, it can be also a fixed network (such as a cable network or a fiber network) or a wireless (radio and/or satellite) network (such as a cellular or mobile 3GPP network (or one evolution, such as LTE) or a WLAN ("Wireless Local Area Network" - IEEE 802.11a, Wi-Fi (802.11g), ETSI HiperLAN/2) or else a WiMAX network (IEEE 802.16, ETSI HiperMAN)).

Moreover, in the following description it will be considered that the communication terminal is a fixed computer. But the invention is not limited to this kind of communication terminal. Indeed, it concerns any type of communication equipment capable of being connected to a communication network in order to exchange data with another communication equipment. So, it can be also a fixed or wireless or mobile (or cellular) telephone or a portable computer or else a personal digital assistant (PDA), since it is equipped with a communication module connectable to a communication network coupled to at least one information source and with a browser capable of browsing this information source to search some information.

The invention proposes a device D comprising at least first FM, second SM and third TM modules coupled therebetween.

As it is schematically illustrated in the unique figure, a device D may equip a (communication) terminal T of a user. But such a device D may be partly localized in a server connected to the network N. More precisely, first modules FM may be localized into the user terminals T while a second SM and a third TM modules may be localized into the server.

Such a device D being intended to work in cooperation with a browser B (possibly of at least one terminal T), it can be at least partly comprised into such a browser B, as illustrated in the unique figure. So, it is preferably made of software modules. But it could be also made of electronic circuit(s) or hardware modules, or a combination of hardware and software modules.

For instance, when the device D is made of software modules, it may be at least partly stored in the Internet files folder of the browser B, and notably the semantic search request. But, the device D may be at least partly stored into at least one other place.

In the following description it will be considered, as a not restrictive example, that the device D is localized into a terminal T.

Let us remind that a (terminal) browser B is a software (generally acting as a HTTP client) which is arranged for browsing into information source(s) IS, which is (are) coupled to the (communication) network N to which its terminal T is connected to, in order to try to find information required by the terminal user by means of a request containing one or several key words.

The first module FM of the device D is arranged for storing (locally or in a distant server) at least one semantic search request that defines chosen information to be searched into the information source(s) IS at chosen instants.

One means here by "semantic search request" a request containing one or several words, preferably in natural language, which define the subject or topic on which a user wishes to receive specific information. Such a request may comprise pertinent (or key) word(s) with possible non-pertinent word(s) like article(s), preposition(s) or conjunction(s). For instance, a semantic search request may be "availability of Lost, season 3", which means that the user wants to know when the season 3 of the series Lost will be available for sale at any provider. Another example can be "l want the latest and most popular pictures of Jean Dumont at Cannes 2007", which means that the user wants to know where (at which website's address) he will found the latest and most popular pictures of Jean Dumont taken at the Cannes festival in 2007.

A semantic search request can be defined by a user under control of the first module FM and by means of the human/machine interface HMI (keyboards and mouse, notably) of his terminal T. For instance, when a user wants to define a new semantic search request, he may access to the browser B of his terminal T, and then he may select a dedicated menu item proposing to define a new semantic search request. This dedicated item selection induces the load of the device D, and more precisely its first module FM which creates a dedicated window on the screen of the terminal T, in which the user can write the words of his semantic search request. When the user has finished writing his request, the first module FM stores it (locally or in a distant server).

It is important to note that the first module FM may also allow the user to define, by means of the human/machine interface HMI of his terminal T, the chosen instant(s) at which he wants that the information corresponding to a semantic search request be searched. For this purpose, the first module FM may create another dedicated window on the screen of the terminal T, in which the user can define each chosen instant for search. In this case, when the user has finished writing his request and the definition of the chosen instants, the first module FM stores the request in correspondence with the associated chosen instant(s) for search.

In a variant, the device D may be arranged for triggering automatically a search defined by a stored semantic search request each time the user connects his terminal T to the information source(s) IS (here Internet). So, in this variant each connection to Internet defines a chosen instant for search.

The second module SM is a semantic module which is arranged for automatically interpreting a semantic search request (that has been stored by the first module FM) at each chosen instant for a chosen terminal user.

One means here by "interpreting the request" the fact that the request is semantically interpreted in order to extract the key (or pertinent) word(s) it contains.

The third module TM is arranged for automatically executing a semantic search request that has just been interpreted by the second (semantic) module SM at a chosen instant, and for warning the corresponding user when information corresponding to this executed request is found in the information source(s) IS (here Internet) to which the user terminal T is connected through its network N.

One means here by "executing the request" the fact that the interpreted request is used by the third module TM to search the requested information into the information source(s) IS.

If the third module TM does not find any information corresponding to the extracted key word(s), it may, for instance, stop working till a next chosen instant for a search (associated to the same semantic search request or to another one also stored by the first module FM).

If the third module TM finds some information corresponding to the extracted key word(s), it warns the corresponding user.

One means here by "warning the corresponding user" the fact that the third module TM triggers (possibly into the concerned terminal T) the transmission of a warning message to a communication means of this user that has been previously designated in association with the semantic search request for which some information has been found.

This communication means is preferably the user terminal T, but this is not mandatory. Indeed it could be another communication equipment of the user, such as his mobile telephone. In such a case, the first module FM may, for instance, create a dedicated window on the screen of the terminal T, in which the user can write a communication identifier (phone number or IP address) of the communication means to which the warning messages must be sent. In this case, when the user has finished writing his request (and possibly the definition of the chosen instants), and the communication identifier, the first module FM stores the request in correspondence with the possible associated chosen instant(s) for search and the communication identifier.

The user (and more precisely his (chosen) communication means) may be warned by any type of warning message. For instance, it can be a SMS, an e-mail or a popup window, or else any kind of window. The first module FM may, for instance, create still another dedicated window on the screen of the terminal T, in which the user can select the type of the warning message. In this case, when the user has finished writing his request (and possibly the definition of the chosen instants and/or the communication identifier) and has selected the type of the warning message, the first module FM stores the request in correspondence with the type of the warning message and with the possible associated chosen instant(s) for search and/or the communication identifier.

The warning message is intended to warn a user that some information corresponding to a semantic search request has been found by the second module SM. So, such a warning message may, for instance, comprise a sentence indicating that there is a response (or possibly N responses) to a fully designated semantic search request. When a user receives such a warning message he may be invited to see the response(s) in a page (or window) of his terminal browser B. If the user agrees (by means of a confirmation), the page is displayed onto the screen of his terminal T and the user can select a displayed address (or link) of a website IS in order to access to the information stored into this website and corresponding to a semantic search request.

The warning message may possibly further comprise the address(es) (or link(s)) of the website(s) IS in which the requested information has been found. In this case, when a user receives such a warning message, he can select one of the addresses (or links) of websites IS the message contains, in order to access automatically via his terminal browser B to the information stored into this website IS and corresponding to the original semantic search request.

At least part of the device D, and notably the second module SM and/or the third module TM, may be arranged in the form of a cookie.

It is important to note that a device D may be dedicated to one or more semantic search requests.

In case where the device D is distributed into the network N, the second SM and third TM modules may be stored into a dedicated server, while first modules FM may be localized into the terminals T (possibly in the form of plug-ins. In this case, the first modules FM may be arranged to transfer the semantic search request concerning their terminals T into the dedicated server, the second module SM is arranged for interpreting every stored semantic search request at the associated chosen times (for instance each time the concerned terminal T is connected to Internet IS, which requires that the server be informed of this connexion), and the third module TM executes the interpreted request to try to find the requested information into the information source(s) IS.

The invention can also be considered as a first method for automatically searching information corresponding to a semantic search request in at least one information source IS by means of a terminal T connected to this (these) source(s) IS.

Such a first method may be implemented by means of a device D such as the one above described with reference to the unique figure. Therefore, only its main characteristics will be mentioned hereafter.

The first method according to the invention consists:
- of storing a semantic search request defining chosen information to be searched into the information source(s) IS at chosen instants for a chosen terminal user,
- of automatically interpreting this semantic request (with the help of a semantic module SM) at the chosen instants, and
- of automatically executing the search request interpreted at the chosen instants and of warning a user when information corresponding to his executed request has been found.

The invention can also be considered as a second method intended for creating a cookie for automatically searching information corresponding to a semantic search request in at least one information source IS for at least one terminal T comprising a human/machine interface HMI.

Such a second method may be implemented by means of a device D such as the one above described with reference to the unique figure. Therefore, only its main characteristics will be mentioned hereafter.

The second method according to the invention consists:
- of using the human/machine interface HMI for defining a semantic search request intended for searching chosen information into at least one information source IS at chosen instants for a chosen terminal user, and
- of creating a cookie comprising a semantic module and intended for automatically interpreting the defined semantic search request by means of this semantic module and then for executing the semantic search request interpreted at the chosen instants and for warning a terminal user when information corresponding to his executed request has been found.

The invention is not limited to the embodiments of methods and device described above, only as examples, but it encompasses all alternative embodiments which may be considered by one skilled in the art within the scope of the claims hereafter.

## Claims

1. Device (D) for at least one communication terminal (T) arranged for searching information in at least one information source (IS) when it is connected to it, **characterized in that** it comprises i) a first means (FM) arranged for storing at least one semantic search request defining chosen information to be searched into said information source (IS) at chosen instants for a chosen terminal user, ii) a second means (SM) arranged for interpreting said stored semantic request at said chosen instants, and iii) a third means (TM) arranged for automatically executing the semantic search request interpreted at said chosen instants, and for warning a user when information corresponding to his executed request has been found.

2. Device according to claim 1, **characterized in that** said second (SM) and third (TM) means are arranged for automatically and respectively interpreting and executing said semantic search request stored by said first means (FM) each time the corresponding user connects his terminal (T) to said information source (IS).

3. Device according to claim 1, **characterized in that** said second (SM) and third (TM) means are arranged for automatically and respectively interpreting and executing said semantic search request stored by said first means (FM) at chosen instants that have been defined by the corresponding user.

4. Device according to one of claims 1 to 3, **characterized in that** said first means (FM) is arranged for allowing a user to define a semantic search request by means of said terminal (T).

5. Device according to one of claims 1 to 4, **characterized in that** said third means (TM) is arranged for warning a user by triggering the transmission of a warning message to a communication means designated in association with a given semantic search request.

6. Device according to claim 5, **characterized in that** said communication means is the user terminal (T).

7. Device according to one of claims 1 to 6, **characterized in that** said third means (TM) is arranged for warning a user by means of a warning message of a type that has been designated in association with said semantic search request.

8. Device according to claim 7, **characterized in that** said warning message type is chosen in a group comprising a SMS, an e-mail, a popup window, and any kind of window.

9. Device according to one of claims 1 to 8, **characterized in that** said third means (TM) is arranged for searching information in an information source (IS) defined by the world wide web.

10. Device according to one of claims 1 to 9, **characterized in that** it is at least partly arranged in the form of a cookie.

11. Browser (B) for a communication terminal (T), **characterized in that** it comprises at least one device (D) according to one of the preceding claims.

12. Method for searching information in at least one information source (IS) for at least one communication terminal (T) connected to said source (IS), **characterized in that** it consists i) of storing a semantic search request defining chosen information to be searched into said information source (IS) at chosen instants for a chosen terminal user, ii) of automatically interpreting this semantic request at said chosen instants, and iii) of automatically executing said semantic search request interpreted at said chosen instants and of warning a user when information corresponding to his executed request has been found.

13. Method according to claim 12, **characterized in that** one automatically interprets and executes said semantic search request each time the corresponding user connects his terminal (T) to said information source (IS).

14. Method according to claim 12, **characterized in that** one automatically interprets and executes said semantic search request at chosen instants defined by the corresponding user.

15. Method according to one of claims 12 to 14, **characterized in that** one warns a user by triggering the transmission of a warning message to a communication means of this user designated in association with his semantic search request.

16. Method according to claim 15, **characterized in that** one transmits said warning message to the terminal (T) of the corresponding user.

17. Method according to one of claims 12 to 16, **characterized in that** one warns a terminal user by means of a warning message of a type that has been designated in association with said semantic search request.

18. Method according to claim 17, **characterized in that** said warning message type is chosen in a group comprising a SMS, an e-mail, a popup window, and any kind of window.

19. Method according to one of claims 12 to 18, **characterized in that** one searches information in an information source (IS) defined by the world wide web.

20. Method for creating a cookie (D) for at least one communication terminal (T) comprising a human/machine interface (HMI), **characterized in that** it consists i) of using said human/machine interface (HMI) for defining a semantic search request intended for searching chosen information into at least one information source (IS) at chosen instants for a chosen terminal user, and ii) of creating a cookie comprising a semantic module and intended for automatically interpreting said defined semantic search request by means of said semantic module and then for executing the semantic search request interpreted at said chosen instants and for warning a user when information corresponding to his executed request has been found.

21. Method according to claim 20, **characterized in that** one uses said human/machine interface (HMI) for defining said chosen instants.

22. Method according to one of claims 20 and 21, **characterized in that** one uses said human/machine interface (HMI) for designating a communication means to which said warning message must be transmitted.

23. Method according to one of claims 20 to 22, **characterized in that** one uses said human/machine interface (HMI) for designating the type of a warning message that must be transmitted to a terminal user.

24. Method according to claim 23, **characterized in that** said warning message type is chosen in a group comprising a SMS, an e-mail, a popup window, and any kind of window.
